# EUROPÄISCHE PATENTSCHRIFT

(11) **EP 2 742 216 B1**
(45) Veröffentlichungstag und Bekanntmachung des Hinweises auf die Patenterteilung: **20.09.2017**
(21) Anmeldenummer: 12737570.7
(22) Anmeldetag: 20.07.2012
(51) Int. Cl.: F01N 3/01, F01N 3/08, F01N 9/00

(54) **VERFAHREN ZUM REGELN EINER IONISATIONSEINRICHTUNG IN EINER ABGASNACHBEHANDLUNGSVORRICHTUNG**
PROCESS OF CONTROLLING AN IONIZATION DEVICE IN AN EXHAUST TREATMENT APPARATUS
PROCÉDÉ DE RÉGULATION D'UN DISPOSITIF D'IONISATION POUR UN SYSTÈME DE TRAITEMENT DES GAZ D'ÉCHAPPEMENT

(30) Priorität: 12.08.2011 DE 102011110057
(43) Veröffentlichungstag der Anmeldung: 18.06.2014
(73) Patentinhaber: Continental Automotive GmbH, 30165 Hannover (DE)
(72) Erfinder: HODGSON, Jan, 53840 Troisdorf (DE); VORSMANN, Christian, 51105 Köln (DE)
(86) Internationale Anmeldenummer: PCT/EP2012/064291
(87) Internationale Veröffentlichungsnummer: WO 2013/023875

(56) Entgegenhaltungen:
- EP-A2- 1 837 067
- FR-A1- 2 861 802

## Beschreibung

Die vorliegende Erfindung betrifft ein Verfahren zum Regeln einer Ionisationseinrichtung in einer Abgasnachbehandlungsvorrichtung einer Verbrennungskraftmaschine. Die Ionisationseinrichtung weist mindestens eine Kathode und eine Anode auf, die mit einem Abstand zueinander in der Abgasnachbehandlungsvorrichtung angeordnet sind. Zwischen der mindestens einen Kathode und der Anode wird eine Hochspannung angelegt, die eine Ionisation der im Abgas befindlichen Rußpartikel ermöglicht.

Bei Kraftfahrzeugen mit mobilen Verbrennungskraftmaschinen und insbesondere bei Kraftfahrzeugen mit Dieselantrieb sind im Allgemeinen Rußpartikel in dem Abgas der Verbrennungskraftmaschine enthalten, welche nicht in die Umwelt abgegeben werden sollen. Dies ist durch entsprechende Abgasverordnungen festgelegt, die Grenzwerte für die Anzahl und die Masse an Rußpartikeln pro Abgasgewicht oder Abgasvolumen sowie teilweise auch für ein gesamtes Kraftfahrzeug vorgeben. Rußpartikel sind insbesondere nicht verbrannte Kohlenstoffe und Kohlenwasserstoffe im Abgas.

Es sind bereits eine Vielzahl unterschiedlicher Konzepte zur Beseitigung von Rußpartikeln aus Abgasen mobiler Verbrennungskraftmaschinen diskutiert worden. Neben wechselseitig geschlossenen Wandstromfiltern, offenen Nebenstromfiltern, Schwerkraftabscheidern etc. sind auch bereits Systeme vorgeschlagen worden, bei denen die Partikel im Abgas elektrisch aufgeladen und dann mit Hilfe elektrostatischer Anziehungskräfte abgelagert werden. Diese Systeme sind insbesondere unter der Bezeichnung "elektrostatischer Filter" oder "Elektrofilter" bekannt.

Bei "Elektrofiltern" werden durch die Bereitstellung eines elektrischen Feldes und/oder eines Plasmas eine Agglomeration von kleinen Rußpartikeln zu größeren Rußpartikeln und/oder eine elektrische Ladung bei Rußpartikeln bewirkt. Elektrisch geladene Rußpartikel und/oder größere Rußpartikel sind in einem Filtersystem deutlich einfacher abzuscheiden. Rußpartikel-Agglomerate werden aufgrund ihrer größeren Massenträgheit in einer Abgasströmung träger transportiert und lagern sich an Umlenkstellen einer Abgasströmung somit einfacher ab. Elektrisch geladene Rußpartikel werden aufgrund ihrer Ladung hin zu Oberflächen gezogen, an welchen sie anlagern und ihre Ladung abgeben können. Auch dies erleichtert die Entfernung von Rußpartikeln aus dem Abgasstrom im Betrieb von Kraftfahrzeugen.

So werden für solche Elektrofilter beispielsweise mehrere Sprühelektroden und Kollektorelektroden vorgeschlagen, die in der Abgasleitung positioniert werden. Dabei werden beispielsweise eine zentrale Sprühelektrode, welche etwa mittig durch die Abgasleitung verläuft, und eine umgebende Mantelfläche der Abgasleitung als Kollektorelektrode dazu genutzt, einen Kondensator auszubilden. Mit dieser Anordnung von Sprühelektrode und der Kollektorelektrode wird quer zur Strömungsrichtung des Abgases ein elektrisches Feld gebildet, wobei die Sprühelektrode beispielsweise mit einer Hochspannung betrieben werden kann, die im Bereich von ca. 15 kV liegt. Hierdurch können sich insbesondere Corona-Entladungen ausbilden, durch welche die mit dem Abgas durch das elektrische Feld strömenden Partikel unipolar aufgeladen werden. Aufgrund dieser Aufladung wandern die Partikel durch die elektrostatischen Coulombkräfte zur Kollektorelektrode.

Neben Systemen, bei denen die Abgasleitung als Kollektorelektrode ausgeführt ist, sind auch Systeme bekannt, bei denen die Kollektorelektrode beispielsweise als Drahtgitter ausgebildet ist, dabei erfolgt die Anlagerung von Partikeln an dem Drahtgitter zu dem Zweck, die Partikel ggf. mit weiteren Partikeln zusammenzuführen, um so eine Agglomeration zu realisieren. Das das Gitter durchströmende Abgas reißt dann die größeren Partikel wieder mit und führt sie klassischen Filtersystemen zu. Auch ist bekannt, die Kollektorelektroden als Struktur mit einer Vielzahl von durchströmbaren Kanälen auszuführen. Die so über eine relativ große Fläche an den Kanalwänden abgeschiedenen Partikel können besonders gut mit dem im Abgas enthaltenen Sauerstoff und/oder Kohlendioxid reagieren und somit umgesetzt werden.

Bei all diesen Systemen ist es wünschenswert, dass in der Ionisationseinrichtung mit einer Kathode und einer Anode eine möglichst hohe Hochspannung zwischen der Kathode und der Anode angelegt wird. Je höher die angelegte Hochspannung ist, umso höher sind die elektrische Ladung der Rußartikel und/oder der Anteil ionisierter Rußpartikel im Abgas. Es ist allerdings zu beachten, dass sich ab einer von den Gasparametern abhängigen Hochspannung ein Lichtbogen ausbildet. Ein Lichtbogen ist ein durch Ionisation zwischen der Kathode und Anode erzeugter Leitungskanal, durch den nahezu der gesamte Strom fließt und aus dem Licht aus dem sichtbaren Spektralbereich emittiert wird. Dieser Lichtbogen kann zwar dafür sorgen, dass sich auf der Elektrode und der Anode abgeschiedene Rußpartikel regenerieren bzw. losgelöst werden, doch ist die regelmäßige Ausbildung eines solchen Lichtbogens unerwünscht, da er zu einer mechanischen Beschädigung der Elektrode und der Anode führen kann.

Bei der Ausbildung eines Lichtbogens fließen in aller Regel hohe Ströme, so dass bei der Verwendung von in ihrer Leistung begrenzten Spannungsquellen die zwischen der Kathode und der Anode angelegte Hochspannung mit ansteigendem Strom absinkt oder vollständig zusammenbricht. Das Absinken der Hochspannung kann dazu führen, dass der Lichtbogen erlischt, was insbesondere bei einem strömenden Abgas regelmäßig vorkommt, da die den Strom verursachenden Ladungsträger von dem strömenden Abgas mitgerissen werden. Das Absinken der Spannung unterhalb eines kritischen Wertes führt zudem dazu, dass keine Partikel mehr beladen werden. Auch wenn der Lichtbogen nach einer gewissen Zeit von alleine erlischt, ist es wünschenswert, das Ausbilden eines Lichtbogens von vornherein zu unterdrücken oder schnellstmöglich zu unterbrechen.

Die FR 2 861 802 A1 offenbart einen elektrostatischen Filter mit einem in Richtung der Abgasströmung aufgespannten Draht, der an eine Spannungsquelle angeschlossen ist. Der Draht ist von einem porösen, metallischen Filtermaterial radial umgeben. Infolge einer Koronaentladung ionisierte Rußpartikel des Abgases setzen sich im Filtermaterial ab. Eine Messeinheit detektiert einen Spannungsabfall infolge der Partikelablagerung, so dass ggf. eine vollständige Regeneration des Filtermaterials eingeleitet werden kann. Eine Regeleinheit steuert die elektrische Stromstärke unter Berücksichtigung des Abgasstroms und der Abgastemperatur.

Es ist daher Aufgabe der vorliegenden Erfindung, die aus dem Stand der Technik geschilderten Probleme zumindest teilweise zu lösen. Insbesondere soll ein Verfahren zum Regeln einer Ionisationseinrichtung in einer Abgasnachbehandlungsvorrichtung einer Verbrennungskraftmaschine angegeben werden, bei der das Ausbilden eines Lichtbogens vermieden wird bzw. bei dem der Lichtbogen schon relativ kurz nach seinem Entstehen gelöscht wird, wobei zu jeder Zeit eine möglichst hohe Spannung an der Ionisationseinrichtung anliegt.

Gelöst wird die Aufgabe durch ein Verfahren zum Regeln einer Ionisationseinrichtung in einer Abgasnachbehandlungsvorrichtung einer Verbrennungskraftmaschine mit mindestens einer Kathode und einer Anode, wobei die mindestens eine Kathode mit einem Abstand zu der Anode in der Abgasnachbehandlungsvorrichtung angeordnet ist, umfassend zumindest die folgenden Schritte:
- Anlegen einer Hochspannung zwischen der mindestens einen Kathode und der Anode,
- Vorgeben eines ersten Werts für die Hochspannung,
- Erfassen eines von der Hochspannung erzeugten Stroms zwischen der mindestens einen Kathode und der Anode,
- Vorgeben eines zweiten Werts für die Hochspannung, wenn der erfasste Strom eine vorgebbare erste Stromstärke eine vorgebbare Anzahl von Malen, insbesondere einmal überschreitet, wobei der zweite Wert kleiner ist als der erste Wert. Unter einer Ionisationseinrichtung ist somit eine Vorrichtung in der Abgasleitung einer Verbrennungskraftmaschine zu verstehen, die zumindest einen Teil der im Abgas befindlichen Partikel ionisieren kann, also mit einer Ladung beaufschlagen kann. Dazu umfasst die Ionisationseinrichtung mindestens eine Kathode und eine von der Kathode beabstandete Anode. Bei einer zwischen der Kathode und der Anode angelegten Spannung treten Elektronen aus der Kathode aus, wobei die Anzahl der austretenden Elektronen im Wesentlichen von der Ausführung der Kathode, insbesondere von dem Krümmungsradius der Kathode und dem Kathodenmaterial abhängt. Die Abgasnachbehandlungsvorrichtung umfasst bevorzugt eine stromabwärts der Ionisationseinrichtung angeordnete Abscheidevorrichtung, an der die geladenen Partikel sich anlagern und ggf. agglomerieren, bevor sie durch eine Reaktion mit entsprechenden Gasen, insbesondere Stickstoffdioxid (NO₂), und/oder eine Temperaturerhöhung umgesetzt werden. Bevorzugt ist die Abscheidevorrichtung als ein durchströmbarer Wabenkörper mit einer Vielzahl von Kanälen ausgeführt.

Die Kathode kann z. B. durch einen in einem Rohr angeordneten Draht gebildet sein, wobei das Rohr die Anode bildet. Ferner kann die Kathode als eine Sprühelektrode ausgebildet sein, die zentral in einer Abgasleitung angeordnet ist und wobei eine stromabwärts der Sprühelektrode angeordnete Abscheidevorrichtung die Anode bildet. Es ist besonders bevorzugt, dass die mindestens eine Kathode auf der Rückseite eines Haltewabenkörpers befestigt ist, der stromauf der Abscheidevorrichtung angeordnet ist. Die mindestens eine Kathode kann dabei sowohl elektrisch isoliert als auch elektrisch leitend mit dem Haltewabenkörper verbunden sein, wobei im letzten Fall die Hochspannung an den gegenüber einem Abgasrohr isolierten Haltewabenkörper angelegt wird.

Das erfindungsgemäße Verfahren wird für die Regelung sowohl einer Hochspannung einer einzelnen Kathode als auch einer Vielzahl von Kathoden, die alle mit derselben Spannungsquelle verbunden sind, eingesetzt. Bevorzugt kann das erfindungsgemäße Verfahren auch für die Regelung jeweils einer Kathode von einer Vielzahl von Kathoden, die jeweils mit einer Spannungsquelle verbunden sind, angewandt werden.

Die Hochspannung zwischen der mindestens einen Kathode und der Anode wird durch eine Hochspannungsquelle erzeugt, wobei die Höhe der Hochspannung proportional zu einer an einer Eingangsseite der Hochspannungsquelle angelegten Niederspannung ist und über die Niederspannung gesteuert wird. Das Anlegen der Hochspannung wird somit insbesondere dadurch realisiert, dass an der Eingangsseite eine Niederspannung angelegt wird, die an einer Ausgangsseite der Hochspannungsquelle eine proportionale Hochspannung zur Folge hat.

Alternativ wird die Höhe der Hochspannung über eine Frequenz einer an der Hochspannungsquelle anliegenden Steuerspannung gesteuert. Dabei liegt an der Hochspannungsquelle zum einen eine konstante Niederspannung an der Eingangsseite an und zum anderen die Steuerspannung mit einer vorgebbaren Frequenz an. In Abhängigkeit von der Frequenz der angelegten Steuerspannung liegt eine Hochspannung an der Ausgangsseite an. Insbesondere wirkt hierbei die Steuerspannung beispielsweise über einen Optokoppler auf die Frequenz eines Oszillators in der Hochspannungsquelle.

Unter Vorgeben ist somit insbesondere zu verstehen, dass ein Wert der Hochspannung durch Anlegen einer Niederspannung oder eine Steuerspannung an der Eingangsseite einer Hochspannungsquelle erzeugt wird, wobei zwischen der Anode und der Kathode eine entsprechende Hochspannung erwartet wird.

Erfindungsgemäß wird der Strom für jede angelegte Hochspannung ermittelt. Damit ist insbesondere gemeint, dass bei einer gewissen vorgegebenen Hochspannung der zwischen der Kathode und der Anode fließende Strom zeitlich kontinuierlich erfasst wird. Der Strom kann bevorzugt durch ein mit der Anode bzw. Kathode und der Spannungsquelle in Reihe geschaltetes Strommessgerät, durch ein zu der Niederspannung auf der Eingangsseite in Reihe geschaltetes Strommessgerät und/oder mittels einer induktiven Strommessung an einer entsprechenden Stelle erfasst werden. Bei einer Strommessung auf der Niederspannungsseite der Spannungsquelle wird nicht zwangsläufig der Strom zwischen Kathode und Anode direkt gemessen, sondern ein dazu proportionaler Wert.

Wird nun beim Erfassen des Stroms festgestellt, dass der Strom eine erste vorgebbare Strömstärke überschreitet, so wird die zwischen der Anode und der Kathode angelegte Hochspannung auf einen zweiten Wert geändert. Die vorgebbare erste Stromstärke ist insbesondere geringer als eine solche Stromstärke, die erwartungsgemäß beim Ausbilden eines Lichtbogens fließt. Die vorgebbare erste Stromstärke ist aber jedoch so groß, dass zu erwarten ist, dass ein relativ großer Anteil der Rußpartikel im Abgas ionisiert wird. Bevorzugt hat die erste Stromstärke eine solche Größe, die erwarten lässt, dass sich ein Lichtbogen ausbildet. Die erste Stromstärke lässt sich beispielsweise in Experimenten ermitteln oder ist bevorzugt von vorhergehenden Durchführungen des Verfahrens bekannt. Der zweite Wert für die Hochspannung wird insbesondere so gewählt, dass sich ein Lichtbogen, der nach Übersteigen der ersten Stromstärke erwartet wird oder eintritt, nicht weiter ausbildet.

Beim Überschreiten der vorgebbaren ersten Stromstärke wird somit ein kritischer Zustand erkannt, bei dem die Ausbildung eines Lichtbogens zwischen der Kathode und der Anode wahrscheinlich ist bzw. bei dem sich ein Lichtbogen ausbildet. Dementsprechend wird die angelegte Hochspannung geändert.

Bevorzugt ist, dass der vorgegebene erste Wert für die Hochspannung mit einer vorgebbaren Hochspannungsanstiegsgeschwindigkeit erhöht wird. Mit einer Hochspannungsanstiegsgeschwindigkeit ist der Wert der Spannungserhöhung pro Zeitintervall gemeint. Die Hochspannung wird also zunächst so weit erhöht, bis sich die Ausbildung eines Lichtbogens durch Überschreiten der ersten Stromstärke durch den erfassten Strom ankündigt. Der zweite Wert für die Hochspannung kann in diesem Fall so gewählt werden, dass er nur knapp unter der Hochspannung liegt, bei der die vorgebbare erste Stromstärke ermittelt wurde. Die angelegte Hochspannung ist somit möglichst nah an den optimalen Wert zur Ionisierung der Rußpartikel angenähert. Besonders bevorzugt wird die Hochspannung einige Male mit einer Hochspannungsanstiegsgeschwindigkeit bis zum Erreichen der ersten Stromstärke erhöht und darauffolgend eine konstante Hochspannung vorgegeben, die aufgrund der zu den erfassten ersten Stromstärken gehörende Hochspannungen eine hohe Ionisation der Rußpartikel erwarten lässt, bei der sich aber kein Lichtbogen ausbildet.

Erfindungsgemäß ist der zweite Wert kleiner als der erste Wert. Der aufgrund der Hochspannung zwischen der einen Kathode und der Anode fließende Strom wird somit durchgehend erfasst und bei Überschreiten eines Grenzwerts, der vorgebbaren ersten Stromstärke, wird die zwischen der Kathode und Anode angelegte Hochspannung reduziert. Dies hat bei ansonsten gleichen Bedingungen zur Folge, dass der zwischen der Kathode und Anode fließende Strom sich verkleinert und das Ausbilden eines Lichtbogens unterdrückt wird.

Gemäß einer vorteilhaften Weiterbildung der Erfindung, die die gestellte Aufgabe auch ohne Überschreiten der vorgebbaren ersten Stromstärke löst, umfasst das Verfahren ferner folgende Schritte:
- Ermitteln einer Stromanstiegsgeschwindigkeit des erfassten Stroms,
- Vorgeben des zweiten Werts für die Hochspannung, wenn die Stromanstiegsgeschwindigkeit einen vorgebbaren Stromanstiegswert überschreitet.

Mit Stromanstiegsgeschwindigkeit ist der Wert gemeint, mit dem sich der Strom pro Zeitintervall ändert. Insbesondere wird die Stromanstiegsgeschwindigkeit durch Differenzbildung von zwei Stromwerten gebildet. Ganz besonders ist bevorzugt, dass ein Stromanstiegswert für ein Zeitintervall von höchstens 0,1 ms [Millisekunde], besonders bevorzugt von höchstens 1 ms berechnet wird. Der Stromanstiegswert beträgt gemessen im Niederspannungskreis der Hochspannungsquelle bevorzugt mindestens 2000 A/s [Ampere pro Sekunde], besonders bevorzugt mindestens 5000 A/s.

Das Ansteigen des Stromes mit einer relativ hohen Stromanstiegsgeschwindigkeit ist charakteristisch für das Ausbilden eines Lichtbogens. Der Stromanstiegswert kann beispielsweise in Experimenten ermittelt werden und somit von vornherein vorgegeben werden, er kann aber auch beim Ausbilden eines Lichtbogens im Betrieb neu bestimmt werden. Dazu wird beispielsweise nach dem Ausbilden eines Lichtbogens die aufsteigende Flanke des erfassten Stroms analysiert und ein entsprechender Stromanstiegswert festgelegt. Eine Analyse des Stromanstiegswerts setzt dabei ab einem festgelegten Stromanstiegswert ein. Da sich gerade ein Lichtbogen durch Anstieg der Stromstärke ankündigt bzw. auszeichnet, kann somit eine Lichtbogenentstehung erkannt werden und entsprechende Maßnahmen eingeleitet werden, insbesondere das Reduzieren der Hochspannung, um das tatsächliche Zustandekommen des Lichtbogens zu vermeiden beziehungsweise um den Lichtbogen zu eliminieren.

Ferner ist es vorteilhaft, wenn der beim Überschreiten des vorgebbaren Stromanstiegswerts dem Strom zugeordnete vorgegebene erste Wert für die Hochspannung eine kritische Hochspannung ist und der zweite Wert für die Hochspannung kleiner als oder gleich wie die kritische Hochspannung ist. Damit ist gemeint, dass die Hochspannung nach Überschreiten des Stromanstiegswerts auf eine Spannung herabgesetzt wird, die kleiner oder gleich der Hochspannung ist, dessen zugehöriger Stromwert zur Berechnung der Stromanstiegsgeschwindigkeit herangezogen wurde. Es ist somit gewährleistet, dass eine Hochspannung angelegt wird, die kleiner ist als die Hochspannung, bei der das Ausbilden eines Lichtbogens drohte. Bevorzugt ist der zweite Wert mindestens 5 % bis 30 %, ganz besonders bevorzugt 5 %bis 15 %, kleiner als die kritische Hochspannung.

Besonders bevorzugt ist, wenn die vorgegebene Hochspannung auf den zweiten Wert reduziert wird, wenn der Strom die vorgebbare erste Stromstärke und/oder die Stromanstiegsgeschwindigkeit den Stromanstiegswert mehrere Male, bevorzugt zum dritten Mal, ganz besonders bevorzugt zum fünften Mal überschreitet. Dies bedeutet also, dass zunächst mehrfach ein Lichtbogen zwischen der Kathode und der Anode ausgebildet wird, bevor die zwischen der Kathode und der Anode angelegte Hochspannung bzw. die Erhöhung der Hochspannung geändert wird. Durch das mehrfache Ausbilden des Lichtbogens wird der auf der Anode und Kathode abgelagerte Ruß verbrannt und somit insbesondere die Kathode gereinigt. Zum anderen wird durch das Umsetzen der abgelagerten Rußpartikel auf der Anode bei Ausbildung als Abscheider der ursprüngliche Durchströmungsquerschnitt wiederhergestellt. Dies sollte insbesondere bei einem Kaltstart zur Reinigung der Kathode, Anode und Isolation durchgeführt werden. Der zweite Wert sollte im Folgenden auf die dann vorherrschenden Bedingungen wie beispielsweise Luftfeuchte, Abnutzung der Elektrode, Abgasparameter usw. abgestimmt sein.

Ferner ist es vorteilhaft, wenn der zweite Wert so vorgegeben wird, dass ein Strom mit einer vorgebbaren zweiten Stromstärke fließt. Insbesondere wird somit eine Regelung vorgeschlagen, bei der die Hochspannung so vorgegeben wird, dass ein Strom mit einer vorgebbaren zweiten Stromstärke fließt und somit ein im Wesentlichen konstanter Strom gehalten wird. In diesem Fall ist die vorgebbare zweite Stromstärke so gewählt, dass ein Lichtbogen nicht ausgebildet werden kann. Dementsprechend wird beim Anstieg des gemessenen Stroms die vorgebbare Hochspannung erniedrigt und bei einem Abfallen des erfassten Stroms die Hochspannung erhöht.

Vorzugsweise werden der erste Wert, der zweite Wert, die erste Stromstärke und/oder die zweite Stromstärke in Abhängigkeit von mindestens einem der folgenden Parameter vorgegeben:
- Alterung der Kathode,
- Betriebspunkt der Verbrennungskraftmaschine,
- Abgasmassenstrom,
- Feuchtigkeit des Abgases,
- Temperatur des Abgases,
- Lasts der Verbrennungskraftmaschine,
- Größe der Partikel im Abgas,
- Anzahl der Partikel.

Das Ausbilden eines Lichtbogens hängt von den Eigenschaften des Abgases und nachrangig auch von der Geometrie der Kathode ab. So ist beispielsweise bei einer Kathode mit einem größeren Biegeradius eine höhere Spannung nötig, um die gleiche Anzahl von Elektronen zu emittieren. Es ist bevorzugt, mit steigendem Abgasmassenstrom eine höhere Hochspannung anzulegen, das heißt einen höheren Wert für den ersten und/oder den zweiten Wert vorzugeben, um die Ionisationseigenschaften der Rußpartikel beizubehalten. Ebenfalls vorteilhaft ist es, bei steigender Feuchtigkeit des Abgases die angelegte Hochspannung zu erniedrigen. Mit steigender Temperatur wird bevorzugt die Hochspannung gesenkt. Auch bei einer höher werdenden Last der Verbrennungskraftmaschine und/oder einem Anstieg der Partikelanzahl im Abgas, wird die Hochspannung abgesenkt. Die Hochspannung wird dabei vorzugsweise um 5 % bis 30 %, besonders bevorzugt um 5 % bis 15 % erniedrigt.

Dies bedeutet, dass für einen ersten Satz Parameterwerte der erste Wert, der zweite Wert, die erste Stromstärke und/oder die zweite Stromstärke vorgegeben sind. Für einen zweiten Satz Parameterwerte, der sich beispielsweise durch einen Lastwechsel der Verbrennungskraftmaschine ankündigt, sind weitere erste Werte, zweite Werte, erste Stromstärken und/oder zweite Stromstärken vorgegeben. Dabei unterscheiden sich die Werte von dem ersten Satz Parameterwerte zu den Werten des zweiten Parametersatzes gemäß den oben angegebenen Abhängigkeiten.

Insbesondere wird die eingangs genannte Aufgabe auch dadurch gelöst, dass die Hochspannung ausschließlich in Abhängigkeit mindestens eines der zuvor aufgeführten Parameters eingestellt wird, um die Ausbildung eines Lichtbogens zu vermeiden. Eine Erfassung der Stromstärke wird in diesem Fall bevorzugt dazu eingesetzt, dass der Strom nahezu konstant auf den von den Parametern abhängigen zweiten Wert geregelt wird. Besonders bevorzugt werden in diesem Fall nur noch Lichtbogen ausgelöst, wenn diese gezielt herbeigeführt werden sollen, um die Elektrode bzw. Anode zu reinigen oder um den ersten Wert und/oder den zweiten Wert für die Hochspannung durch Erfassen des Stroms nachzukalibrieren. So kann für eine jede zu erwartende Abgascharakteristik jeweils eine Spannung vorgegeben werden, die für eine optimale Ionisationsausbeute sorgt und bei der die Ausbildung eines Lichtbogens verhindert wird.

Bei einer besonders bevorzugten Ausführungsform der Erfindung wird der erste Wert in Abhängigkeit von dem zweiten Wert mindestens eines vorherigen Betriebszyklus vorgegeben. Darunter ist zu verstehen, dass ein zweiter Wert, der in einem vorherigen Betriebszyklus, insbesondere in Abhängigkeit mindestens eines Parameters eingestellt wurde, zur Einstellung bei einem neuen Betriebszyklus verwandt wird. Es soll somit insbesondere ein selbstadaptierendes Verfahren vorgeschlagen werden, das aus den Erfahrungswerten vorheriger Betriebszyklen lernt. So wird bei jedem Überschreiten der vorgebbaren ersten Stromstärke und des vorgebbaren Stromanstiegswerts nicht nur die dazugehörige Hochspannung erfasst, sondern auch die oben aufgeführten Parameter. Aus den aufgezeichneten Daten kann z. B. unter Zuhilfenahme von Korrelationsbetrachtungen ermittelt werden, welchen Einfluss die Parameter auf die den Lichtbogen auslösende Hochspannung haben. Es werden also für einen Satz Parameter bei der Ausbildung eines Lichtbogens jedes Mal der erste Wert, der zweite Wert, die erste Stromstärke und/oder die zweite Stromstärke aufgezeichnet, wobei bei Wiederauftreten dieser Parameter die entsprechende, gegebenenfalls gemittelte Hochspannung angelegt wird. Jeder erfasste Datensatz eines ausgebildeten Lichtbogens wird somit zur Verbesserung der Ionisierung benutzt.

Einem weiteren Aspekt der Erfindung folgend wird ein Kraftfahrzeug vorgeschlagen, umfassend eine Verbrennungskraftmaschine und eine Abgasnachbehandlungsvorrichtung mit einer Ionisationseinrichtung, die eine Kathode und eine Anode aufweist und eine Steuereinrichtung, die eingerichtet ist, um das erfindungsgemäße Verfahren durchzuführen.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: ein Kraftfahrzeug mit einer Abgasnachbehandlungseinrichtung,
- Fig. 2:: eine Abgasnachbehandlungseinrichtung mit einer Ionisationseinrichtung,
- Fig. 3:: den zeitlichen Verlauf des in einer Ionisationseinrichtung fließenden Stroms bei strömenden Abgas,
- Fig. 4:: einen zeitlichen Verlauf des Stroms und der Spannung bei der Durchführung eines erfindungsgemäßen Verfahrens und
- Fig. 5:: eine Spannungsquelle zur Durchführung des erfindungsgemäßen Verfahrens.

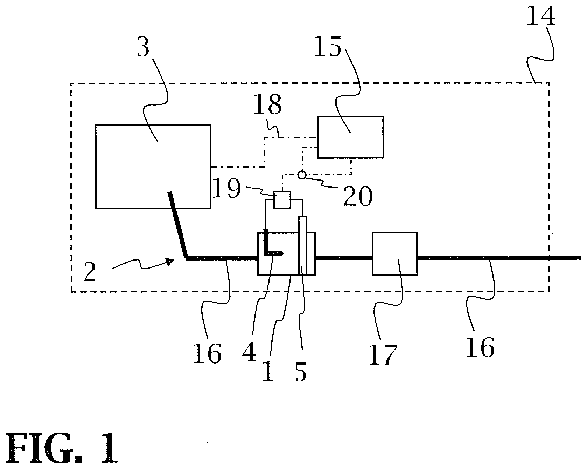

Fig. 1 zeigt schematisch ein Kraftfahrzeug 14 mit einer Verbrennungskraftmaschine 3, an die eine Abgasnachbehandlungseinrichtung 2 angeschlossen ist. Die Abgasnachbehandlungseinrichtung 2 umfasst eine Abgasleitung 16, in der eine Ionisationseinrichtung 1 mit einer Kathode 4 und einer Anode 5 und ein Abscheider 17 angeordnet ist. Zwischen der Kathode 4 und der Anode 5 ist mit Hilfe einer Spannungsquelle 19 eine Hochspannung anlegbar. Ein Strom, der zu dem zwischen der Kathode 4 und Anode 5 fließenden Strom proportional ist, ist mit Hilfe eines Strommessgeräts 20 in einer zur Spannungsquelle 19 führenden Niederspannungsleitung messbar. Die Spannungsquelle 19, das Strommessgerät 20 und die Verbrennungskraftmaschine 3 sind mit einer Steuereinrichtung 15 über Datenleitungen 18 verbunden. Die Steuereinrichtung 15 ist eingerichtet und ausgestattet, um das erfindungsgemäße Verfahren durchzuführen.

Im Betrieb verlässt das Abgas die Verbrennungskraftmaschine 3 durch die Abgasleitung 16 und tritt in die Ionisationseinrichtung 1 ein. Durch Anlegen einer Hochspannung zwischen der Kathode 4 und der Anode 5 treten Elektronen aus der Kathode 4 aus und werden zu der Anode 5 beschleunigt. Hierbei können die Elektronen die im Abgas befindlichen Rußpartikel ionisieren. Das Abgas durchströmt im Folgenden den Abscheider 17, wo die Partikel und die ionisierten Rußpartikel abgelagert werden und eventuell agglomerieren. Die abgelagerten Rußpartikel werden gegebenenfalls durch Reaktion mit im Abgas enthaltenen Gasen, insbesondere NO₂, und/oder durch Temperaturerhöhung regeneriert. Die Steuereinrichtung 15 ist so eingerichtet, dass das Ausbilden eines Lichtbogens zwischen der Kathode 4 und der Anode 5 frühzeitig erkannt und unterdrückt bzw. abgebrochen werden kann. Hierzu wertet die Steuereinrichtung 15 den mit dem Strommessgerät 20 gemessenen Strom in der Niederspannungsleitung zur Spannungsquelle 19 aus. Bei Überschreiten einer vorgebbaren Stromstärke wird die zwischen der Kathode 4 und Anode 5 angelegte Hochspannung geändert, insbesondere reduziert.

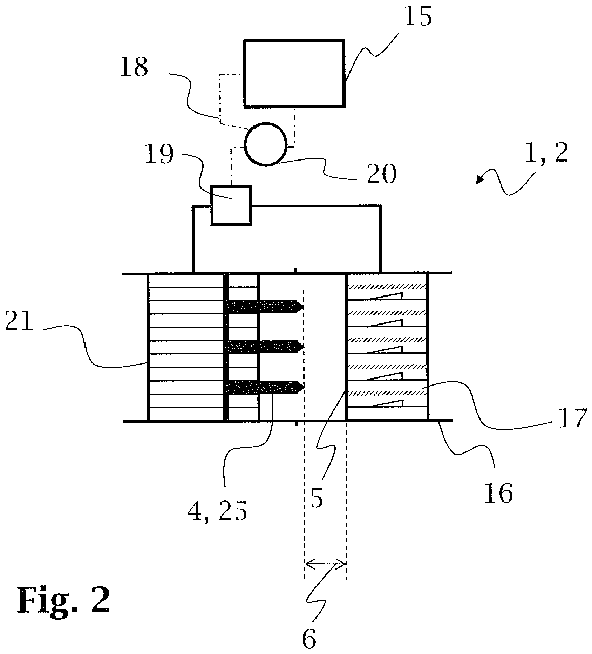

Fig. 2 stellt schematisch einen Ausschnitt einer Abgasnachbehandlungseinrichtung 2 dar. Im Folgenden wird insbesondere auf die Unterschiede zu der in Fig. 1 dargestellten Ausführungsform eingegangen. In diesem Ausführungsbeispiel ist die Kathode 4 durch drei Elektroden 25 gebildet, welche an einem Elektrodenhalter 21 befestigt sind. Der Elektrodenhalter 21 ist als elektrisch leitfähiger Wabenkörper ausgebildet, so dass eine Hochspannung an den Elektrodenhalter 21 angelegt werden kann, die gleichzeitig an den Elektroden 25 anliegt. Alternativ wäre es möglich, die Elektroden 25 gegenüber dem Elektrodenhalter 21 zu isolieren und die Hochspannung direkt an die Elektrode 25 anzulegen. Die Anode 5 ist in diesem Ausführungsbeispiel als Abscheider 17 ausgeführt. Die Elektroden 25 haben einen Abstand 6 zu der Eintrittsfläche des Abscheiders 17 und somit zu der Anode 5. Der Elektrodenhalter 21 ist elektrisch gegenüber dem Abgasleitung 16 isoliert.

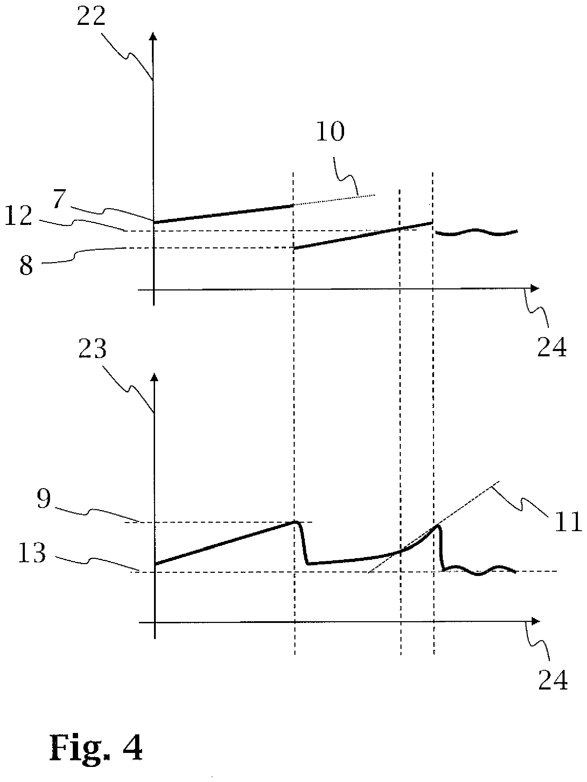

Der Elektrodenhalter 21 ist mit einer Vielzahl von durchströmbaren Kanälen ausgeführt, so dass das Abgas beim Hindurchströmen vergleichmäßigt wird. In dem Raum zwischen der Kathode 4 und der Anode 5 werden die Rußpartikel im Abgas ionisiert, so dass sie sich mit einer erhöhten Wahrscheinlichkeit in dem Abscheider 17 ablagern. Erfindungsgemäß ist vorgesehen, dass der Strom zwischen der Kathode 4 und der Anode 5 ermittelt wird, wobei bei Überschreiten einer kritischen Stromstärke die angelegte Spannung geändert wird. Das Verfahren wird noch genauer mit den Ausführungen zu Fig. 4 erklärt.

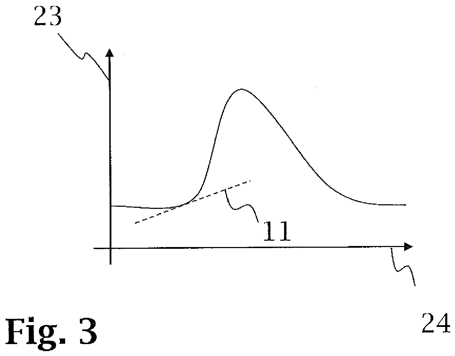

In Fig. 3 ist der zeitliche Verlauf des Stroms 23 über die Zeit 24 bei einem Rußpartikel enthaltenem Abgasstrom durch eine Ionisationseinrichtung 1 mit einer Kathode 4 und einer Anode 5 bei einer konstanten durch eine leistungsbegrenzte Spannungsquelle vorgegebenen Spannung gezeigt. Solange sich die Parameter des Abgases nicht ändern, fließt ein nahezu konstanter Strom. Bei Erhöhung der Partikelkonzentration, der Temperatur des Abgases und/oder der Feuchtigkeit des Abgases steigt jedoch der Strom mit einer Stromanstiegsgeschwindigkeit 11 an. Dies kann daran liegen, dass Moleküle und/oder Rußpartikel im Abgas verstärkt zum Stromfluss beitragen, da eine Ionisierung der Moleküle und/oder Rußpartikel wahrscheinlicher ist. Bei einer kaskadenartigen Ionisierung der Moleküle und/oder Partikel bildet sich ein Lichtbogen aus, so dass der Strom 23 schnell ansteigt. Da bei einer leistungsbegrenzten Spannungsquelle jedoch bei steigendem Strom die Spannung sinkt, bricht der Lichtbogen zusammen und der zwischen der Anode 5 und Kathode 4 fließende Strom 23 sinkt wieder ab. Die vorliegende Erfindung will das Ausbilden eines Lichtbogens vermeiden bzw. den Lichtbogen frühzeitig eliminieren.

Dazu ist in Fig. 4 schematisch eine Regelstrategie veranschaulicht. In der oberen Darstellung ist die zwischen der Kathode 4 und der Anode 5 vorgegebene Spannung 22 im zeitlichen Verlauf über die Zeit 24 dargestellt. In der unteren Darstellung ist der aus der Spannung 22 resultierende Strom 23 im zeitlichen Verlauf über die Zeit 24 dargestellt. Zunächst wird eine Spannung 22 mit einem ersten Wert 7 angelegt, wobei die Spannung 22 mit einer Hochspannungsanstiegsgeschwindigkeit 10 erhöht wird. Der resultierende Strom 23 steigt (zumindest bei gleichbleibenden Abgasbedingungen) in einem Spannungsbereich, in dem sich kein Lichtbogen ausbildet, linear an. Bei Erreichen einer ersten vorgebbaren Stromstärke 9 wird die Spannung 22 auf einen zweiten Wert 8 erniedrigt, der hier im Wesentlichen niedriger ist als der erste Wert 7 der Spannung 22. Beim Anlegen der Hochspannung mit dem zweiten Wert 8 reduziert sich auch der Strom 23.

Bei einer alternativen oder kumulativen Regelstrategie, die sich gemäß der Darstelllung in Fig. 4 an die vorherbeschriebene Regelstrategie anschließt, wird die Hochspannung ausgehend von dem zweiten Wert 8 zunächst wieder erhöht. Kommt es nun aufgrund einer Änderung eines Abgasparameters zu einem Anstieg der Stromstärke mit einer Stromanstiegsgeschwindigkeit 11, die einen vorgebbaren Stromanstiegswert überschreitet, so wird die Hochspannung reduziert. Die Stromanstiegsgeschwindigkeit 11 kann beispielsweise durch Differenzbildung von zwei zeitlich beabstandeten Stromstärken gebildet werden. In diesem Fall wird die Hochspannung auf die Größe reduziert, deren entsprechende Stromstärke zur Ermittlung der Stromanstiegsgeschwindigkeit 11 benutzt wurde. Dieser Spannungswert wird hier als kritische Hochspannung 12 bezeichnet. Bevorzugt wird die Hochspannung auf einen Wert kleiner als die kritische Hochspannung 12 reduziert.

Eine weitere Regelstrategie zur Vermeidung eines Lichtbogens sieht vor, die sich gemäß Fig. 4 an die vorherige Regelstrategie anschließt, dass der Strom 23 eine zweite vorgebbare Stromstärke 13 nahezu einhält. Die angelegte Hochspannung wird also so geregelt, dass ein Strom 23 mit der zweiten vorgebbaren Stromstärke 13 fließt. Dementsprechend wird die Spannung bei ansteigendem Strom verringert und bei fallendem Strom erhöht. Bevorzugt ist, dass die zweite vorgebbare Stromstärke 13 eine Funktion der Abgasparameter ist, wobei jedem Satz Abgasparameter eine zweite vorgebbare Stromstärke 13 zugeordnet ist, so dass eine Spannung 22 zwischen der Kathode 4 und Anode 5 anliegt, aufgrund derer möglichst viele Rußpartikel ionisiert werden, bei der das Ausbilden eines Lichtbogens aber nicht stattfindet.

Die Hochspannung, bei der ein Lichtbogen ausgebildet wird, hängt stark von den Parametern des Abgasstroms ab. Die im Betrieb ermittelten Hochspannungen zu den vorgebbaren ersten Stromstärken 9 der vorgebbaren Stromanstiegsgeschwindigkeit 11 sind daher auch in Abhängigkeit von den Abgasparametern aufgezeichnet, so dass ein selbstadaptierendes System ausgebildet werden kann, bei dem bekannt ist, wie in bestimmten Situationen die Hochspannung zu wählen ist, dass auch eine optimale Ionisation der Rußpartikel stattfinden kann, ein Lichtbogen aber wirksam verhindert wird.

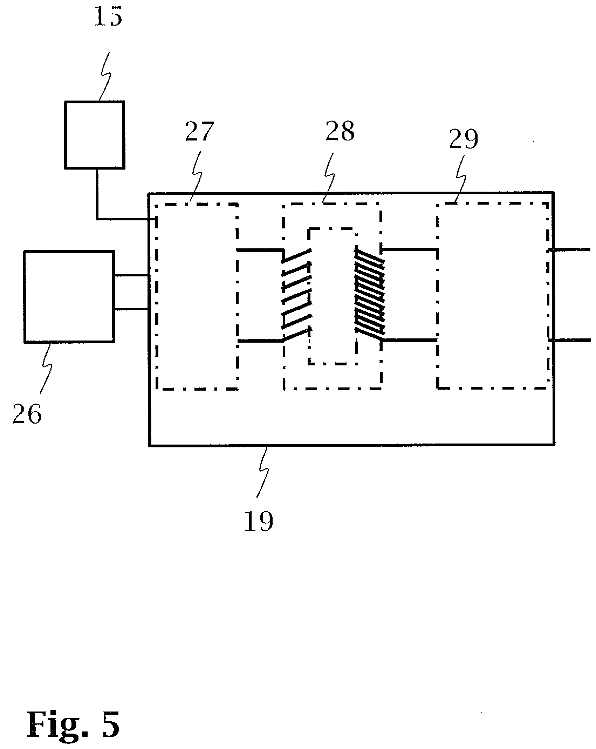

Fig. 5 zeigt schematisch eine Spannungsquelle 19, wie sie zur Durchführung des erfindungsgemäßen Verfahrens eingesetzt werden kann. Die Spannungsquelle 19 weist einen Oszillator 27, einen Transformator 28 und eine Hochspannungskaskade 29 auf. Die Spannungsquelle 19 ist eingangsseitig mit einer Steuereinrichtung 15 und einer Spannungsversorgung 26 verbunden. Ausgangsseitig ist die Spannungsquelle 19 mit einer Ionisationseinrichtung 1 verbunden.

Um die an der Ausgangsseite anliegende Hochspannung einzustellen, bestehen zwei Möglichkeiten. Zum einen kann die Hochspannung proportional zu einer an der Eingangsseite anliegenden Niederspannung (0 - 10 V) sein. Alternativ kann die Ausgangsspannung durch eine von der Steuereinrichtung 15 vorgegebene Frequenz eines Steuersignals abhängen.

Die Erfindung eignet sich besonders zum stabilen und effektiven Betrieb einer Abgasreinigungseinrichtung mit Ionisation von Partikeln im Abgas.

### Bezugszeichenliste

- 1: Ionisationseinrichtung
- 2: Abgasnachbehandlungseinrichtung
- 3: Verbrennungskraftmaschine
- 4: Kathode
- 5: Anode
- 6: Abstand
- 7: erster Wert
- 8: zweiter Wert
- 9: erste vorgebbare Stromstärke
- 10: Hochspannungsanstiegsgeschwindigkeit
- 11: Stromanstiegsgeschwindigkeit
- 12: kritische Hochspannung
- 13: zweite vorgebbare Hochspannung
- 14: Kraftfahrzeug
- 15: Steuereinrichtung
- 16: Abgasleitung
- 17: Abscheider
- 18: Datenleitung
- 19: Spannungsquelle
- 20: Strommessgerät
- 21: Elektrodenhalter
- 22: Spannung
- 23: Strom
- 24: Zeit
- 25: Elektrode
- 26: Spannungsversorgung
- 27: Oszillator
- 28: Transformator
- 29: Hochspannungskaskaden

## Patentansprüche

1. Verfahren zum Regeln einer Ionisationseinrichtung (1) in einer Abgasnachbehandlungsvorrichtung (2) einer Verbrennungskraftmaschine (3) mit mindestens einer Kathode (4) und einer Anode (5), wobei die mindestens eine Kathode (4) mit einem Abstand (6) zu der Anode (5) in der Abgasnachbehandlungsvorrichtung (2) angeordnet ist, umfassend zumindest die folgenden Schritte:
- Anlegen einer Hochspannung zwischen der mindestens einen Kathode (4) und der Anode (5),
- Vorgeben eines ersten Werts (7) für die Hochspannung,
- Erfassen eines von der Hochspannung erzeugten Stroms zwischen der mindestens einen Kathode (4) und der Anode (5),
- Vorgeben eines zweiten Werts (8) für die Hochspannung, wenn der erfasste Strom eine vorgebbare erste Stromstärke (9) eine vorgebbare Anzahl von Malen überschreitet, wobei der zweite Wert (8) kleiner ist als der erste Wert (7).

2. Verfahren nach Anspruch 1, wobei der vorgegebene erste Wert (7) für die Hochspannung mit einer vorgebbaren Hochspannungsanstiegsgeschwindigkeit (10) erhöht wird.

3. Verfahren nach einem der vorhergehenden Ansprüche, ferner umfassend die folgenden Schritte:
- Ermitteln einer Stromanstiegsgeschwindigkeit (11) des erfassten Stroms,
- Vorgeben des zweiten Werts (8) für die Hochspannung, wenn die Stromanstiegsgeschwindigkeit (11) einen vorgebbaren Stromanstiegswert überstreitet.

4. Verfahren nach Anspruch 3, wobei der beim Oberschreiten des vorgebbaren Stromanstiegswerts dem Strom zugeordnete vorgegebene erste Wert (7) für die Hochspannung eine kritische Hochspannung (12) ist und der zweite Wert (8) für die Hochspannung kleiner als oder gleich wie die kritische Hochspannung (12) ist.

5. Verfahren nach einem der vorhergehenden Ansprüche, wobei die vorgegebene Hochspannung auf den zweiten Wert (8) reduziert wird, wenn der Strom die vorgebbare erste Stromstarke (9) und/ oder die Stromanstiegsgeschwindigkeit den Stromanstiegswert mehrere Male überschreitet.

6. Verfahren nach einem der vorhergehenden Ansprüche, wobei der zweite Wert (8) so vorgegeben wird, dass ein Strom mit einer vorgebbaren zweiten Stromstarke (13) fließt.

7. Verfahren nach einem der vorhergehenden Ansprüche, wobei der erste Wert (7) und/oder der zweite Wert (8) in Abhängigkeit von mindestens einem der folgenden Parameter vorgegeben wird:
- Alterung der Kathode.
- Betriebspunkt der Verbrennungskraftmaschine (3),
- Abgasmassenstrom,
- Feuchtigkeit des Abgases,
- Temperatur des Abgases,
- Last der Verbrennungskraftmaschine (3),
- Größe der Partikel im Abgas.

8. Verfahren nach einem der vorhergehenden Ansprüche, wobei der erste Wert (7) in Abhängigkeit von dem zweiten Wert (8) mindestens eines vorherigen Betriebszyklus vorgegeben wird.

9. Verfahren nach einem der vorhergehenden Anspruche, wobei die Hochspannung zwischen der mindestens einen Kathode (4) und der Anode (5) durch eine Hochspannungsquelle (19) erzeugt wird, wobei die Höhe der Hochspannung proportional zu einer an einer Eingangsseite der Hochspannungsquelle (19) angelegten Niederspannung ist und über die Niederspannung gesteuert wird.

10. Verfahren nach einem der Ansprüche 1 bis 8, wobei die Hochspannung zwischen der mindestens einen Kathode (4) und der Anode (5) durch eine Hochspannungsquelle (19) erzeugt wird, wobei die Höhe der Hochspannung über eine Frequenz einer an der Hochspannungsquelle (19) anliegenden Steuerspannung gesteuert.

11. Kraftfahrzeug (14), umfassend eine Verbrennungskraftmaschine (3) und eine Abgasnachbehandlungsvorrichtung (2) mit einer Ionisationseinrichtung (1), die eine Kathode (4) und eine Anode (5) aufweist, und eine Steuereinrichtung (15), die eingerichtet ist, um ein Verfahren gemäß einem der Ansprüche 1 bis 10 durchzuführen.

## Claims

1. Method for regulating an ionization device (1) in an exhaust-gas aftertreatment apparatus (2) of an internal combustion engine (3), having at least one cathode (4) and one anode (5), wherein the at least one cathode (4) is arranged in the exhaust-gas aftertreatment apparatus (2) at a distance (6) from the anode (5), comprising at least the following steps:
- applying a high voltage between the at least one cathode (4) and the anode (5),
- predefining a first value (7) for the high voltage,
- detecting a current, generated by the high voltage, between the at least one cathode (4) and the anode (5),
- predefining a second value (8) for the high voltage if the detected current exceeds a predefinable first current intensity (9) a predefinable number of times, wherein the second value (8) is lower than the first value (7).

2. Method according to Claim 1, wherein the predefinable first value (7) for the high voltage is increased with a predefinable high-voltage increase rate (10).

3. Method according to one of the preceding claims, also comprising the following steps:
- determining a current increase rate (11) of the detected current,
- predefining the second value (8) for the high voltage if the current increase rate (11) exceeds a predefinable current increase value.

4. Method according to Claim 3, wherein the predefinable first value (7) for the high voltage assigned to the current in the event of exceedance of the predefinable current increase value is a critical high voltage (12), and the second value (8) for the high voltage is less than or equal to the critical high voltage (12).

5. Method according to one of the preceding claims, wherein the predefined high voltage is reduced to the second value (8) if the current exceeds the predefinable first current intensity (9), and/or the current increase rate exceeds the current increase value, multiple times.

6. Method according to one of the preceding claims, wherein the second value (8) is predefined such that a current with a predefinable second current intensity (13) flows.

7. Method according to one of the preceding claims, wherein the first value (7) and/or the second value (8) is predefined as a function of at least one of the following parameters:
- aging of the cathode,
- operating point of the internal combustion engine (3),
- exhaust-gas mass flow rate,
- humidity of the exhaust gas,
- temperature of the exhaust gas,
- load of the internal combustion engine (3),
- size of the particles in the exhaust gas.

8. Method according to one of the preceding claims, wherein the first value (7) is predefined as a function of the second value (8) from at least one previous operating cycle.

9. Method according to one of the preceding claims, wherein the high voltage between the at least one cathode (4) and the anode (5) is generated by means of a high-voltage source (19), wherein the magnitude of the high voltage is proportional to a low voltage applied to an input side of the high-voltage source (19) and is controlled by means of the low voltage.

10. Method according to one of Claims 1 to 8, wherein the high voltage between the at least one cathode (4) and the anode (5) is generated by means of a high-voltage source (19), wherein the magnitude of the high voltage controlled by means of a frequency of a control voltage applied to the high-voltage source (19).

11. Motor vehicle (14), comprising an internal combustion engine (3) and an exhaust-gas aftertreatment apparatus (2) having an ionization device (1) which has a cathode (4) and an anode (5), and comprising a control device (15) which is set up to carry out a method according to one of Claims 1 to 10.

## Revendications

1. Procédé de régulation d'un dispositif d'ionisation (1) dans un système de traitement des gaz d'échappement (2) d'un moteur à combustion interne (3) comportant au moins une cathode (4) et une anode (5), dans lequel l'au moins une cathode (4) est disposée à une certaine distance (6) de l'anode (5) dans le système de traitement des gaz d'échappement (2), comprenant au moins les étapes consistant à :
- appliquer une haute tension entre l'au moins une cathode (4) et l'anode (5),
- prédéfinir une première valeur (7) pour la haute tension,
- détecter un courant généré par la haute tension entre l'au moins une cathode (4) et l'anode (5),
- prédéfinir une seconde valeur (8) pour la haute tension lorsque le courant détecté dépasse une première intensité de courant (9) pouvant être prédéfinie un nombre de fois pouvant être prédéfini, dans lequel la seconde valeur (8) est inférieure à la première valeur (7).

2. Procédé selon la revendication 1, dans lequel la première valeur (7) prédéfinie pour la haute tension est augmentée à une vitesse d'augmentation de haute tension (10) pouvant être prédéfinie.

3. Procédé selon l'une quelconque des revendications précédentes, comprenant en outre les étapes consistant à :
- déterminer une vitesse d'augmentation de courant (11) du courant détecté,
- prédéfinir la seconde valeur (8) pour la haute tension lorsque la vitesse d'augmentation de courant (11) dépasse une valeur d'augmentation de courant pouvant être prédéfinie.

4. Procédé selon la revendication 3, dans lequel la première valeur (7) prédéfinie pour la haute tension et associée au courant lors du dépassement de la valeur d'augmentation de courant pouvant être prédéfinie est une haute tension critique (12) et la seconde valeur (8) de la haute tension est inférieure ou égale à la haute tension critique (12).

5. Procédé selon l'une quelconque des revendications précédentes, dans lequel la haute tension prédéfinie est réduite à la seconde valeur (8) lorsque le courant dépasse la première intensité de courant (9) pouvant être prédéfinie et/ou lorsque la vitesse d'augmentation du courant dépasse plusieurs fois la valeur d'augmentation du courant.

6. Procédé selon l'une quelconque des revendications précédentes, dans lequel la seconde valeur (8) est prédéfinie de manière à permettre le passage d'un courant ayant une seconde intensité de courant (13) pouvant être prédéfinie.

7. Procédé selon l'une quelconque des revendications précédentes, dans lequel la première valeur (7) et/ou la seconde valeur (8) est/sont prédéfinie(s) en fonction d'au moins l'un des paramètres suivants :
- le vieillissement de la cathode,
- le point de fonctionnement du moteur à combustion interne (3),
- le débit massique du gaz d'échappement,
- l'humidité du gaz d'échappement,
- la température du gaz d'échappement,
- la charge du moteur à combustion interne (3),
- la taille des particules contenues dans le gaz d'échappement.

8. Procédé selon l'une quelconque des revendications précédentes, dans lequel la première valeur (7) est prédéfinie en fonction de la seconde valeur (8) d'au moins un cycle de fonctionnement précédent.

9. Procédé selon l'une quelconque des revendications précédentes, dans lequel la haute tension est générée entre l'au moins une cathode (4) et l'anode (5) par une source de haute tension (19), dans lequel la hauteur de la haute tension est proportionnelle à une basse tension appliquée à un côté d'entrée de la source de haute tension (19) et est commandée par l'intermédiaire de la basse tension.

10. Procédé selon l'une quelconque des revendications 1 à 8 précédentes, dans lequel la haute tension entre l'au moins une cathode (4) et l'anode (5) est générée par une source de haute tension (19), dans lequel la hauteur de la haute tension est commandée par l'intermédiaire d'une fréquence d'une tension de commande appliquée à la source de haute tension (19).

11. Véhicule automobile (14) comprenant un moteur à combustion interne (3) et un système de traitement des gaz d'échappement (2) muni d'un dispositif d'ionisation (1) présentant une cathode (4) et une anode (5), et un dispositif de commande (15) conçu pour mettre en oeuvre un procédé selon l'une quelconque des revendications 1 à 10.
